# EUROPEAN PATENT APPLICATION

(11) **EP 4 527 544 A2**
(43) Date of publication of application: **26.03.2025**
(21) Application number: 24195557.4
(22) Date of filing: 21.08.2024
(51) Int. Cl.: B23P 6/00, B23K 1/00, F01D 5/00, B23H 9/10, B23H 9/00, B23H 1/04

(54) **METHODS FOR JOINING COMPONENTS AT NARROW, UNIFORM BRAZE JOINTS**

(30) Priority: 15.09.2023 US 202318467913
(71) Applicant: General Electric Technology GmbH, 5400 Baden (CH)
(72) Inventor: HUNT, Mark L., Greenville, 29615 (US); BAKER, Benjamin Erick, Greenville, 29615 (US); SMITH, Randy J., Greenville, 29615 (US)
(74) Representative: Freigutpartners IP Law Firm

(57) **Abstract**

A method of joining a first component (302) and a second component (304) includes providing the first component including a first surface (320); providing the second component including a second surface (322); creating a braze joint (230) between the first and second surfaces using a sinker electrical discharge machining (EDM) device (300), where the first component (320) is used as an electrode of the sinker EDM device and a voltage is generated between the first and second components such that the braze joint is created by spark erosion of at least one of the first component and the second component; and coupling the first and second components securely together along the braze joint.

## Description

### BACKGROUND

The field of the disclosure relates generally to joining components at braze joints, and more specifically, to methods of joining components that include creating a narrow, uniform j oint having a small gap tolerance between surfaces of the components. In one embodiment, the joint is created using a sinker electrical discharge machining device in which one of the components is used as an electrode that is worked against the surface of the other component to enable complementing surface profiles to be machined in the components.

For at least some known components fabricated in whole or in part from metal alloys, cracks or defects in the component may occur during normal operation or use. For example, at least some known rotary machines use stainless steels and nickel-base, cobalt-base, and iron-base superalloys for components exposed to the hot flow path of the rotary machine during operation. The hot flow path may subject the components to thermal and/or mechanical loads, stresses, and strains, which over time, may result in cracks or other defects forming in the components. When a crack or defect occurs in such components, the damaged component is typically salvaged by repairing the damaged region with a filler component fabricated from a similar metal alloy material that is able to withstand the high temperatures, stresses, and/or strains from exposure to the hot flow path.

Some known methods of repairing such a rotary machine component require removing the damaged region from the component (e.g., via machining) such that a cut-out region is formed in the component, and then inserting a filler insert or coupon that is coupled (e.g., via brazing) to the component within the cut out region. For those components that are exposed to the hot flow path and that are fabricated from superalloys, brazing is a common technique to couple the insert within the component. In a typical braze process, a braze material is applied within a gap or joint defined between the insert and the cut-out region of the component. The braze material is then melted to enable the liquid or molten braze material to fill the joint via capillary action. The molten braze material is then cooled when solidified, securely couples the insert within the component along the joint.

A high-quality brazed connection between the insert and the component facilitates mitigating or eliminating a propensity of the insert to break free from the component in response to mechanical and thermal loads exerted on the component while the rotary machine is in operation. A key factor in achieving a high-quality brazed connection is a tight, well-fitting braze joint created between the insert and the component. In fact, a narrow, uniform gap along the braze joint promotes the capillary action of the molten braze material to fully fill the joint and to solidify with little to no porosity in the finished braze. To this end, the surface profiles of the insert and the component that define the braze joint must substantially match to enable a narrow gap to be created with a tight gap tolerance. Higher degrees of surface profile mismatch between the insert and the cut-out of the component create a wider gap, and/or localized wide gap regions, along the braze joint, which may limit the capillary action of the molten braze material to fully fill the braze joint, thus contributing to higher porosity in the solidified braze material and a lower quality of the brazed connection.

The insert and/or the component are typically machined using milling or wire electrical discharge machining (EDM) to enable surface profiles of the insert and the component to substantially match, and to create the braze joint. However, conventional machining techniques are limited and may be frequently unable to achieve narrow braze joints with desired gap tolerances. For example, hot flow path components typically have complex three-dimensional geometry surface profiles that are difficult to match using conventional machining, such as milling and wire EDM, in which the component and the insert are independently machined. Additionally, the machining element (i.e., a rotary cutter and/or a wire electrode) may be limited in its ability to reach certain areas on the insert and/or component that require machining to obtain a desired surface profile. Accordingly, a need exists for methods of joining components, such as for use in repairing hot flow path components, with filler inserts, that includes a practical, cost-effective approach for creating narrow, uniform braze joints to facilitate a higher quality braze between the components.

### BRIEF DESCRIPTION

In one aspect, a method of joining a first component and a second component is provided. The method includes providing the first component including a first surface; providing the second component including a second surface; creating a braze joint between the first and second surfaces using a sinker electrical discharge machining (EDM) device, wherein the first component is used as an electrode of the sinker EDM device and a voltage is generated between the first and second components such that the braze joint is created by spark erosion of at least one of the first component and the second component; and coupling the first and second components securely together along the braze joint.

In another aspect, a method of repairing a component for use in a turbine engine is provided. The turbine engine component includes a first surface. The method includes providing a filler component including a second surface; creating a braze joint between the first surface and the second surface using a sinker electrical discharge machining (EDM) device, wherein one of the turbine engine component and the filler component is used as an electrode of the sinker EDM device and a voltage is generated between the turbine engine component and the filler component to create the braze j oint by spark erosion of at least one of the turbine engine component and the filler component; and coupling the turbine engine component and the filler component securely together along the braze joint.

In another aspect, a method of joining a first component and a second component is provided. The method includes machining at least one of the first and second components to create a first joint between a first surface of the first component and a second surface of the second component; after the machining, creating a second joint between the first and second surfaces, wherein the second joint has a smaller gap tolerance than the first joint, and wherein the second joint is created by spark eroding complementing surface profiles in the first and second surfaces using one of the first and second components as an electrical discharge machining (EDM) electrode; and coupling the first and second components securely together along the second joint.

### BRIEF DESCRIPTION OF DRAWINGS

These and other features, aspects, and advantages of the present disclosure will become better understood when the following detailed description is read with reference to the accompanying drawings in which like characters represent like parts throughout the drawings, wherein:
FIG. 1 is a schematic view of an exemplary rotary machine;
FIG. 2 is a perspective view of an exemplary component that is exposed to a hot flow path section of the rotary machine of FIG. 1, and that has been repaired or refurbished;
FIG. 3 is a schematic of an exemplary sinker electrical discharge machining device used to create a braze joint between two components;
FIGS. 4-6 illustrate a illustrate an exemplary process sequence in which a narrow, uniform braze joint is created between two components; and
FIG. 7 is a flow diagram of an exemplary method of joining two components.

Corresponding reference characters used throughout the drawings indicate corresponding parts. Unless otherwise indicated, the drawings provided herein are meant to illustrate features of embodiments of the disclosure. These features are believed to be applicable in a wide variety of systems comprising one or more embodiments of the disclosure. As such, the drawings are not meant to include all conventional features known by those of ordinary skill in the art to be required for the practice of the embodiments disclosed herein.

### DETAILED DESCRIPTION

The exemplary embodiments described herein relate to methods of joining two components together by creating a braze joint between the components using sinker electrical discharge machining (EDM). Specifically, in an exemplary embodiment, a first of the components is used as an electrode of a sinker EDM device and is plunged into a surface of a second of the components, wherein the second component serves as the workpiece of the sinker EDM device. The EDM device is used to form complementing surface profiles between the first and second components with high precision. A narrow, tight-fitting braze joint, having a small gap tolerance, is created between the components as a result. The components may then be fixedly coupled together along the braze joint via a brazing process, and/or via another suitable technique such as, but not limited to, welding or soldering. The narrow, tight-fitting braze joint enables a high-quality braze to be formed between the components, that is capable of withstanding high temperatures, stresses, and strains, such as those that may be experienced within a hot flow path of a rotary machine, such as a gas turbine engine. Accordingly, the exemplary methods described herein may suitably be implemented to join components together that are used in hot flow path areas of a turbine engine. For example, in some embodiments, the exemplary methods described herein may be implemented to repair or refurbish a worn region of a hot flow path component (e.g., a rotor blade or nozzle vane of a gas turbine engine) with a filler component (e.g., an insert or a coupon).

Using sinker EDM to create braze joints in accordance with exemplary embodiments may overcome several disadvantages of machining techniques that are conventionally used to create braze joints, such as milling or wire EDM for example. In at least some conventional techniques, the components are independently machined to form the surface profiles that define the braze joint. However, forming the surface profiles in the components using separate machining operations increases the propensity for mismatches between the surface profiles. The likelihood that the surface profiles will be mismatched may be exacerbated by the complex three-dimensional geometries of one or both of the components. The sinker EDM process described herein overcomes these disadvantages by machining the surface profiles together in a single machining operation, wherein complements of complex and/or precise features or contours of a surface profile of one of the components are simultaneously and directly formed via the EDM process into the other component. Moreover, sinker EDM creates a narrow gap along the braze joint with a smaller gap tolerance in a more reliable and/or cost-effective manner than conventional machining techniques.

Another disadvantage associated with conventional machining techniques may be the limited reach of the tool element (e.g., a rotary cutter of a mill and/or a wire electrode of a wire EDM device) because the size and shape of the component may make it difficult to access all areas of the component that need machining. As a result, when performing conventional machining, unsuitable braze joints and low quality brazes may be created, which may result in component failure or higher material costs if the components cannot be salvaged, and/or higher manufacturing costs and lower efficiencies if the component(s) must be arranged in multiple different orientations within the machining device during the machining operation. The sinker EDM overcomes these disadvantages as the EDM electrode negates the disadvantage of having to use a conventional machining tool to machine a complex workpiece.

When introducing elements of various embodiments disclosed herein, the articles "a," "an," "the," and "said" are intended to mean that there are one or more of the elements and include plural references unless the context clearly dictates otherwise. "Optional" or "optionally" means that the subsequently described event or circumstance may or may not occur, and that the description includes instances where the event occurs and instances where it does not. Furthermore, references to "one embodiment" are not intended to be interpreted as excluding the existence of additional embodiments that also incorporate the recited features. Moreover, unless explicitly stated to the contrary, the terms "comprising," "including," and "having" are intended to be inclusive and mean that there may be additional elements other than the listed elements.

Unless otherwise indicated, approximating language, such as "generally," "substantially," "approximately," and "about," as used herein indicates that the term so modified may apply to only an approximate degree, as would be recognized by one of ordinary skill in the art, rather than to an absolute or perfect degree. Accordingly, a value modified by a term or terms such as "about," "approximately," and "substantially" is not to be limited to the precise value specified. In at least some instances, the approximating language may correspond to the precision of an instrument for measuring the value.

Unless otherwise indicated, the terms "first," "second," etc. are used herein merely as labels, and are not intended to impose ordinal, positional, or hierarchical requirements on the items to which these terms refer. Moreover, reference to, for example, a "second" item does not require or preclude the existence of, for example, a "first" or lower-numbered item or a "third" or higher-numbered item.

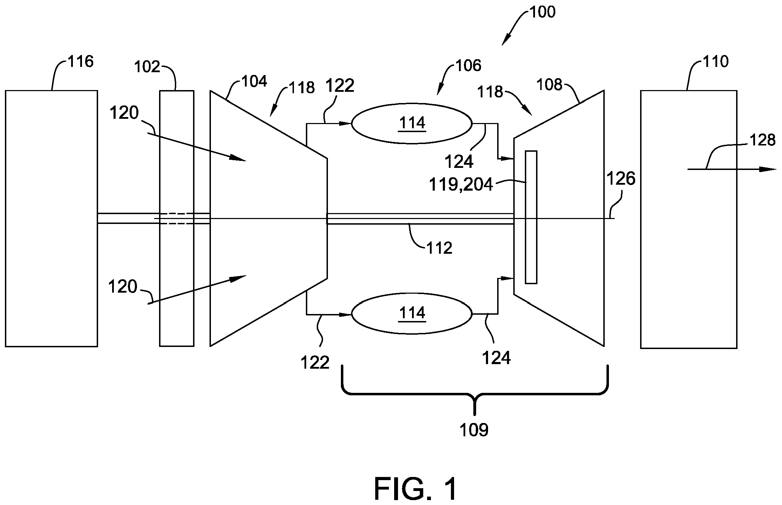

Referring now to the drawings, FIG. 1 is a schematic view of an exemplary rotary machine 100. The rotary machine 100 may be a turbomachine, and more specifically a turbine engine. In the exemplary embodiment, the rotary machine 100 is a gas turbine engine. In alternative embodiments, the rotary machine 100 may be any other turbine engine and/or rotary machine, including, without limitation, a steam turbine engine, a gas turbofan aircraft engine, other aircraft engine, a wind turbine, a compressor, and a pump. The rotary machine 100 may be interchangeably referred to herein as a turbine engine 100, but embodiments are not limited to turbine engines.

In the exemplary embodiment, the turbine engine 100 includes an intake section 102, a compressor section 104 that is downstream from intake section 102, a combustor section 106 that is downstream from compressor section 104, a turbine section 108 that is downstream from combustor section 106, and an exhaust section 110 that is downstream from turbine section 108. The turbine section 108 is coupled to the compressor section 104 via a rotor shaft 112. As used herein, the term "couple" is not limited to a direct mechanical, thermal, electrical, and/or flow communication connection between components, but may also include an indirect mechanical, thermal, electrical, and/or flow communication connection between multiple components. In the exemplary embodiment, the combustor section 106 includes a plurality of combustors 114. The combustor section 106 is coupled to compressor section 104 such that each combustor 114 is in flow communication with the compressor section 104. The rotor shaft 112 is further coupled to a load 116 such as, but not limited to, an electrical generator and/or a mechanical drive application. In the exemplary embodiment, each of the compressor section 104 and the turbine section 108 includes at least one rotor assembly 118 that is coupled to the rotor shaft 112. Each rotor assembly 118 of the turbine section 108 includes a plurality of circumferentially arranged, radially extending turbine blades 119.

In operation, the intake section 102 channels air 120 towards compressor section 104. The compressor section 104 compresses inlet air 120 to higher pressures prior to discharging compressed air 122 towards the combustor section 106. The compressed air 122 is channeled to the combustor section 106 where it is mixed with fuel and burned to generate high temperature combustion gases 124. Combustion gases 124 are channeled downstream towards turbine section 108 and impinge upon turbine blades 119, converting thermal energy to mechanical rotational energy that is used to drive rotor assembly 118 about a longitudinal axis 126. Often, the combustor section 106 and the turbine section 108 are referred to as a hot flow path section 109 or a hot gas section 109 of the turbine engine 100. Exhaust gases 128 then discharge through exhaust section 110 to ambient atmosphere.

In some embodiments, during operation of the turbine engine 100, components 204 of the hot gas section 109, such as but not limited to turbine blades 119, stator vanes (not shown), and/or shrouds (not shown), can be exposed to temperatures as high as, for example, 1250° Celsius, creating thermal stresses in the components. In the turbine section 108, the components 204 are also subjected to mechanical stresses during operation, such as stresses from high-speed rotation and from exposure to high-speed hot gases from combustor 106. Such extreme operating conditions can cause cracks due to creep and/or fatigue and other defects to form within components 204 of hot gas section 109, requiring repair. The components 204 may also be referred to herein as hot gas components 204 or hot flow path components 204.

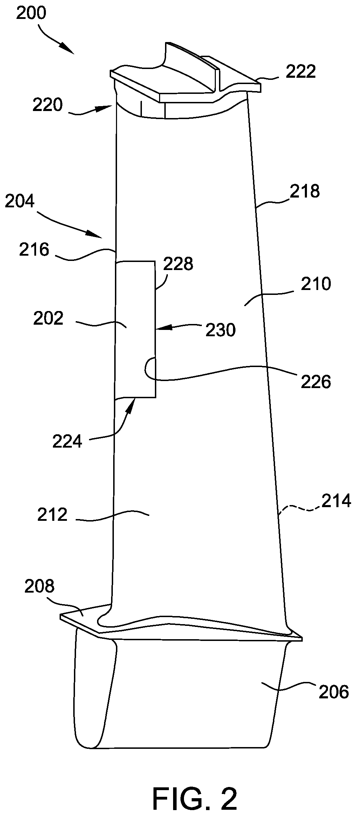

FIG. 2 is a perspective view of an exemplary repaired or refurbished hot flow path component 200 in which a filler insert 202, also referred to as a filler component or a coupon, is inserted into, and thus replaces a cut-out 224 formed in the hot gas component 204. The cut-out 224 may be formed in a worn region or area of the component 204 where cracks or other defects have formed during use in the turbine engine 100. In the illustrated example, the hot gas component 204 is a turbine blade that may be used as a turbine blade 119 in the turbine engine 100. The hot gas component 204 may alternatively be referred to as a turbine blade 204. However, the repaired hot gas component 200 is not limited to repaired or refurbished turbine blades. For example, other hot gas components of the turbine engine (e.g., stator vanes, shrouds, and the like) may be repaired with filler components in accordance with the methods described herein.

The turbine blade 204 includes a root 206 that enables the turbine blade 204 to be coupled to the rotor shaft 112 within the turbine section 108 of the turbine engine 100 (FIG. 1). The root 206 may include a dovetail (not shown) configured for mounting in a corresponding dovetail slot (not shown) formed in the perimeter of a rotor disc (not shown) extending from the rotor shaft 112. The root 206 may also include a shank (not shown) that extends between the dovetail and a platform 208, which extends at the junction of an airfoil 210 and the root 206 which defines a portion of the inner boundary of the hot flow path through the turbine section 108. The airfoil 210 is the active component of the turbine blade 204 that intercepts the flow of the combustion gases 124 and induces the rotor shaft 112 to rotate. The airfoil 210 includes a concave pressure side sidewall 212 and a circumferentially or laterally-opposite convex suction side sidewall 214 that extends axially between a leading edge 216 and an opposing trailing edges 218 of the airfoil 210. Sidewalls 212 and 214 also extend radially from the platform 208 to an outboard tip end 220 of the airfoil 210. The turbine blade 204 may include a tip shroud 222 at the tip end 220 of the airfoil 210.

The turbine blade 204 may be fabricated of any suitable material that can withstand the operating conditions within the hot gas section 109. For example, the turbine blade 204 may be fabricated from nickel-base, cobalt-base, iron-base, nickel-iron-base superalloys, and/or combinations thereof. Such "superalloys" may contain about 50% or more by weight of nickel, cobalt, iron, or nickel-iron, plus alloying elements that are added to improve the mechanical and physical properties of these alloys. For example, in some embodiments, the turbine blade 204 may be fabricated from nickel-based superalloys such as CMSX-4^{®}, René N4^{™}, René N5^{™}, René 108^{™}, GTD-111^{®}, GTD-222^{®}, GTD-444^{®} and IN-738. René N4^{™}, René N5^{™}, René 108^{™}, GTD-111^{®}, GTD-222^{®} and GTD-444^{®} comprise gamma prime-strengthened nickel-base superalloys. In some embodiments, the turbine blade 204 may be fabricated from cobalt-base superalloys such as FSX-414. While certain alloys have been presented herein for the turbine blade 204, it should be appreciated that these are exemplary only and are not intended to be limiting. The material used may vary depending on the intended application of the component 204.

The repaired or refurbished turbine blade 200 includes the coupon 202 positioned in the cut-out 224 formed in the turbine blade 204. The cut-out 224 may be formed by removing a worn region of the turbine blade 204, such as an area on the turbine blade where cracks or defects have formed during use in the turbine engine 100. Suitable techniques for forming the cut-out 224 include, but are not limited to including, milling, hand grinding, and electrical discharge machining (EDM) techniques. In the exemplary embodiment, the cut-out 224 is formed along the leading edge 216 of the airfoil 210, and extends from the leading edge 216 into the sidewalls 212 and 214. The airfoil 210 may be particularly susceptible to crack or defect formation in areas adjacent to the leading edge 216, which intersects the flow of the combustion gases 124 within the hot gas section 109 of the turbine engine 100. However, the location of the cut-out 224 is provided by way of example only, and other areas of the airfoil 210, or the turbine blade 204, may be replaced with the coupon 202. For example, the cut-out 224 may be formed at any area of the component 204 where, due to rotational stress, exposure to forces from rapidly flowing combustion gases, and/or cyclic thermomechanical strain on the component 204, cracks, wear, or other defects may occur and require repair or refurbishing using the coupon 202. In alternative embodiments, a defect may have been formed by any other process, such as, for example, intentionally or unintentionally during a casting or machining process of the component 204.

The coupon 202 may be fabricated from a similar material as the turbine blade 204, such as the superalloys described above. In some embodiments, the coupon 202 may be fabricated from a different superalloy than the turbine blade 204. For example, the coupon 202 may be fabricated from a material having a higher resistance to thermal and/or mechanical loads than the materials used in fabricating the turbine blade 204. In some embodiments, the coupon 202 may be fabricated from nickel-chromium-base superalloys, chromium-base superalloys, tungsten-base alloy, chromium carbide materials, or combinations thereof. For example, the coupon 202 may be fabricated from an INCONEL^{®} nickel-chromium superalloy material including INCONEL^{®} Alloy 600, INCONEL^{®} Alloy 617, and INCONEL^{®} Alloy 625, available from Special Metals Corporation, Huntington, W. Va. The coupon 202 may additionally and/or alternatively be fabricated from a cobalt-chromium alloy, such as one of the STELLITE^{®} family of cobalt-chromium alloys, including STELLITE^{®} 6, available from Deloro Wear Solutions GmbH, Koblenz, Germany.

As shown in FIG. 2, the coupon 202 is positioned in tight tolerances within the cut-out 224 formed in the airfoil 210. The coupon 202 may have any suitable shape and/or size that substantially matches the shape and/or size of the cut-out 224. For example, the coupon 202 may be formed using casting, molding, powder metal manufacturing, additive manufacturing or 3D printing, and/or computer machining (e.g., computer numerical control machining). In particular embodiments, the coupon 202 may be additively manufactured as an individual component having a shape and/or size that substantially matches a shape and/or size of the cut-out 224. As used herein, the term "additively manufactured" or "additive manufacturing process" corresponds but is not limited to various known 3D printing manufacturing methods such as Extrusion Deposition, Wire, Granular Materials Binding, Powder Bed and Inkjet Head 3D Printing, Lamination and Photopolymerization. The various technologies related to the various 3D printing methods include but are not limited to unless recited in the claims, fused deposition modeling (FDM), electron beam free-from fabrication (EBF), direct metal laser sintering (DMLS), Electron Beam Melting (EBM), Selective Laser Melting (SLM), Selective Heat Sintering (SHS), Selective Laser Sintering (SLS), Plaster-based 3D Printing (PP), Laminated Object Manufacturing (LOM), Stereolithography (SLA) and Digital Light Processing (DLP). The shape (e.g., outer wall angling/shape), size (e.g., cut-out size), and features (e.g., internal cooling structures) of the coupon 202 may be customized for the particular application of the hot gas component 204 and the area of the hot gas component that is replaced by the coupon 202.

The coupon 202 is coupled within the cut-out 224 using any suitable technique to join the turbine blade 204 and the coupon 202. In various embodiments, the coupon 202 is coupled to the airfoil 210 within the cut-out 224 via soldering or brazing, in which a filler material (e.g., a filler metal alloy) is applied to a recessed surface 226 of the leading edge 210 defined by the cut-out 224 and/or to a surface 228 of the coupon 202 to be coupled to the recessed surface 226. The surfaces 226 and 228 are brought together to form a joint 230 wherein the filler material is positioned therebetween. The filler material is heated and is subsequently solidified to fixedly secure the coupon 202 to the airfoil 210 along the joint 230.

In the exemplary embodiment, brazing is commonly used to fixedly secure the coupon 202 to the airfoil 210 along the joint 230. A suitable brazing process may be performed on the coupon 202 and the turbine blade 204 within a heating compartment (e.g., a vacuum furnace) that both supplies heat and induces a vacuum during the brazing process. For example, the heating compartment may supply uniform temperatures across an environment within the heating compartment, while inducing a sufficient vacuum within the environment to remove at least some gases present in environment, such as, for example, oxygen, nitrogen, carbon dioxide, water vapor, and/or methane.

The brazing process includes applying a braze filler material to the recessed surface 226 and/or the surface 228 of the coupon 202 to be coupled to the recessed surface 226. Suitable braze filler material includes, for example, a pure braze filler alloy (e.g., DF-4B diffusion braze alloy), or one or more of aluminum, silicon, copper, silver, germanium, gold, nickel, cobalt, and boron. In some embodiments, the braze filler alloy is a multi-component eutectic with relatively low melting point compared to the component 204 and the coupon 202. For example, the braze filler alloy may have a melting temperature less than about 1120° Celsius, or between about 900° to about 1100° Celsius. The braze filler material may consist entirely or substantially of a braze filler alloy, or may include other material in addition to the braze filler alloy, such as a superalloy powder and/or a binder.

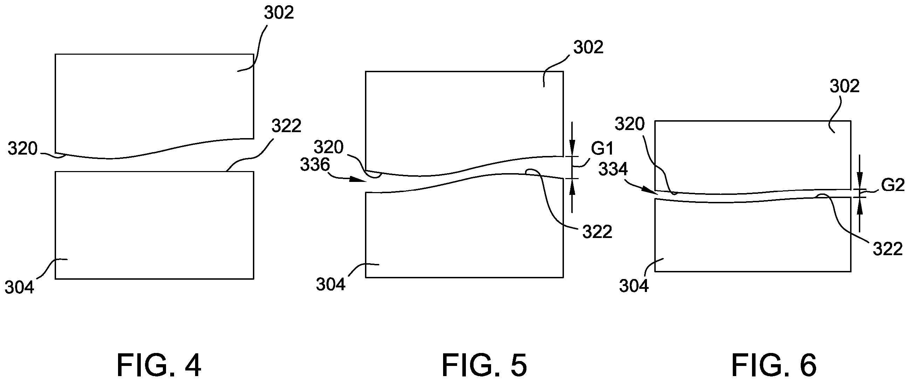

With the brazing filler material applied to one or both of the surfaces 226 and/or 228, the coupon 202 is positioned within the cut-out 224 such that the braze filler material is sandwiched between the coupon 202 and the airfoil 210 along the joint 230. The coupon 202 and the turbine blade 204 are positioned in the heating compartment and the environment within the heating compartment is heated to a suitable brazing temperature. The brazing temperature may vary depending on the brazing filler material and the material(s) that form the coupon 202 and the component 204. In general, the brazing temperature is lower than the melting temperature of the coupon 202 and the component 204 and high enough to cause the braze filler material to become molten, or at least partially molten. The molten braze filler material flows between the surfaces 226 and 228 within a gap (e.g., gap G₂ shown in FIG. 6) defined along the joint 230 (which may also be referred to as a braze joint 230) by capillary action. The environment may be held at the brazing temperature for any suitable length of time to enable the capillary action of the molten braze filler material to take place. The temperature within the environment is then lowered to allow the molten braze filler material to cool and solidify, thereby fixedly securing the coupon 202 to the airfoil 210 along the joint 230 and producing the repaired or refurbished component 200.

A high-quality brazed connection between the coupon 202 and the component 204 requires a narrow gap width (e.g., less than about 100 micrometers, µm) along the braze joint 230 with minimal variations in the gap width across the braze joint 230. Variations in the gap width across the braze joint 230 may be referred to herein as a gap tolerance of the braze joint 230. As the gap width and/or gap tolerance increases, the capillary action of the molten braze filler material is limited and the molten braze filler material may not entirely fill the gap along the braze joint 230. As a result, when the braze filler material cools and solidifies, pores or voids may form therein, which may reduce the quality of the brazed connection and increase the propensity for the coupon 202 to break free from the component 204 when used in the rotary machine 100. The gap width along the braze joint 230 and the corresponding gap tolerance may depend on the level of matching between the surface profiles of the recessed surface 226 and the surface 228 of the coupon 202. The surface profiles of the surfaces 226 and 228, including contours and other three-dimensional features, must complement one another to a high degree of precision to achieve a narrow gap width, and a small gap tolerance of the braze joint 230, and thus, facilitates the capillary action of the molten braze filler material to substantially entirely fill the gap along the braze joint 230.

In accordance with exemplary embodiments, the coupon 202 and the component 204 are subjected to a sinker electrical discharge machining (EDM) operation to create the braze joint 230 with a narrow gap width and with a small gap tolerance. Sinker EDM (also referred to as plunge EDM or ram EDM) facilitates precise machining of features into a component or workpiece. Complex three-dimensional features, small precise features, and tight tolerance features in the workpiece are examples of features that are suitably achieved by sinker EDM. A sinker EDM process may include an electrode that has a "positive" profile or shape that is "sunk" (plunged or burned) into a surface of the workpiece. The electrode is worked against the workpiece via spark erosion achieved via an electrical voltage generated between the electrode and the workpiece, thus removing material from the workpiece to produce a "negative" profile or shape in the machined surface that substantially complements or matches the positive profile of the electrode, including complex, small, and/or tight tolerance features with high precision. With sinker EDM, no pressure is applied to the material being machined by the electrode, as the features are burned to their shape, rather than abraded. As such, very complicated, highly precise shapes and/or patterns may be machined in the workpiece using the sinker EDM process that are not practicably reproducible by other machining techniques, such as milling or wire EDM for example.

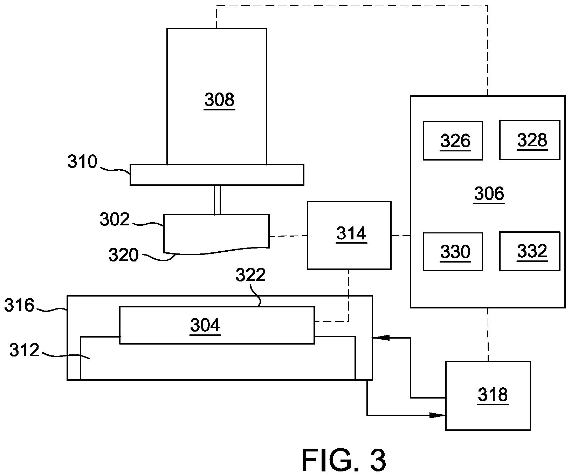

FIG. 3 is a schematic of an exemplary sinker EDM device 300 that may be used to create a narrow, uniform braze joint between surfaces of two components 302 and 304 to be coupled together by brazing. The components 302 and 304 may, in some embodiments, be the coupon 202 and the hot gas component 204 shown in FIG. 2, with a first component 302 being one of the coupon 202 and the component 204, and a second component 304 being the other 202 or 204. The sinker EDM device 300 may be used to create the braze joint 230 between the coupon 202 and the airfoil 210 with a narrow gap width and small gap tolerance.

In the exemplary embodiment, the sinker EDM device 300 includes a controller 306 and an actuator 308 communicatively coupled to the controller 306. Any suitable actuator may be used as the actuator 308, such as a rotary actuator, linear actuator, pneumatic actuator, hydraulic actuator, electric actuator, and the like. The actuator 308 is coupled to a ram 310. The ram 310 is coupled to the first component 302, either directly or by a mechanical linkage such as a shank or an arm. In the exemplary embodiment, the first component 302 is used as the electrode of the sinker EDM device 300, and the second component 304 is positioned on a work platform 312. In other embodiments, either of the first component 302 or the second component 304 may be used as the electrode of the sinker EDM device 300. The actuator 308 is operable to move the ram 310 and the electrode (e.g., the first component 302) towards the workpiece (e.g., the second component 304) during the sinker EDM process.

A power supply 314 is operable to provide electric current to the first component 302 and the second component 304, such that a voltage is generated between the first and second components 302 and 304. Suitably, the components 302 and 304 are each fabricated from a conductive material, such as a metal or metal alloy, to enable the electric current to be provided to, and the voltage to be generated between, the components 302 and 304. In embodiments where one of the components 302 and 304 is the coupon 202 (FIG. 2) and the other of the components 302 and 304 is the hot gas component 204 (FIG. 2), the components 302 and 304 may be fabricated from any one of the superalloys, or any combination of the superalloys, described above. A polarity of the voltage, or direction of current flow between the first component 302 and the second component 304, depends on the type of charge supplied to the first component 302 and to the second component 304. The polarity of the voltage can be positive or negative. A positive polarity is generated by the power supply 314 providing a positive charge to the electrode or first component 302 and a negative charge to the second component 304. A negative polarity is generated by the power supply 314 providing a negative charge to the electrode or first component 302 and a positive charge to the second component 304. The polarity may be static or unchanging during a sinker EDM process, or may change (e.g., from positive to negative polarity) during the sinker EDM process. The polarity may be selected or controlled depending on the operating conditions and desired effects of the sinker EDM process, including, but not limited to including, the type of material that the components 302 and 304 are fabricated from, a desired degree of precision, a desired duration of the sinker EDM process, etc.

The second component 304 and the work platform 312 may be positioned within a dielectric fluid tank or chamber 316 and a dielectric fluid supply 318 is coupled in flow communication with the chamber 316. A flow of dielectric fluid may be provided from the dielectric fluid supply 318 to the chamber 316, using a dielectric fluid pump (not shown) for example. The dielectric fluid may also be circulated between the dielectric fluid supply 318 and the chamber 316. The dielectric fluid supply 318 may include filters (not shown) and/or cooling devices (not shown) for treating the dielectric fluid being circulated between the dielectric fluid supply 318 and the chamber 316. As described further below, the dielectric fluid facilitates generating high-intensity sparks between a surface 320 of the component 302 and a surface 322 of the component 304 at a sufficient voltage generated by the electric charges provided to the components 302 and 304. The high-intensity sparks work on one or both of the surfaces 320 and/or 322, achieving complementing surface profiles in the surfaces 320 and 322 with high precision.

In the exemplary embodiment, the sinker EDM device 300 includes the controller 306 that is communicatively coupled to the actuator 308, the power supply 314, and the dielectric fluid supply 318. The controller 306 may communicate with one of more of these components via a communication interface coupled in communication with one or more of these devices. The communication interface may include, without limitation, a wired network adapter, a wireless network adapter, a mobile telecommunications adapter, a serial communication adapter, or a parallel communication adapter. The communication interface may receive a data signal from, or transmit a data signal to, one or more remote devices, such as the actuator 308, the power supply 314, and/or the dielectric fluid supply 318.

The controller 306 is operable to control remote devices of the sinker EDM device 300 (e.g., the actuator 308, the power supply 314, and/or the dielectric fluid supply 318) by executing, via a processor 326, instructions stored in a memory device 328 that is communicatively coupled to the processor 326. The processor 326 may include one or more processing units, such as, for example, a multi-core configuration. The memory device 328 is one or more devices that enable storage and retrieval of information such as executable instructions or other data. The memory device 328 may include one or more computer readable media, for example, and without limitation, random access memory (RAM), dynamic RAM, static RAM, a solid-state disk, a hard disk, read-only memory (ROM), erasable programmable ROM, electrically erasable programmable ROM, or non-volatile RAM memory. The above memory types are exemplary only, and are thus not limiting as to the types of memory usable for storage of a computer program.

The processor 326 may be programmed by encoding an operation as one or more executable instructions and providing the executable instructions in the memory device 328. In various embodiments, the processor 326 may be programmed to control operating conditions of the sinker EDM process based on desired duration and efficiency of the sinker EDM process and the level of precision and finish of the machined components 302 and 304. For example, the processor 326 may adjust the power settings of the power supply 314, including, for example, the intensity of the current provided by the power supply 314 to the components 302 and 304, as well as the polarity of the voltage generated between the components 302 and 304. The memory device 328 may store data associated with the sinker EDM process including, without limitation, real-time and historical operating parameter values, or any other type of data. The memory device 328 may store instructions that are executable by the processor 326 to control the sinker EDM process based, for example, on the type of material used for the components 302 and 304, the desired features to be machined in one or both of the surfaces 320 and 322, and the like. In some embodiments, the processor 326 removes or "purges" data from the memory device 328 based on the age of the data. For example, the processor 326 may overwrite previously recorded and stored data associated with a subsequent time or event. In addition, or alternatively, the processor 326 may remove data that exceeds a predetermined time interval. In addition, the memory device 328 includes, without limitation, sufficient data, algorithms, and commands to enable the processor 326 to control the sinker EDM process for the sinker EDM device 300 to function as described herein.

In some embodiments, the controller 306 includes a presentation interface 330 coupled to the processor 326. The presentation interface 330 presents information, such as a user interface, to an operator of the sinker EDM device 300. In one embodiment, the presentation interface 330 includes a display adapter (not shown) that is coupled to a display device (not shown), such as a cathode ray tube (CRT), a liquid crystal display (LCD), an organic LED (OLED) display, or an "electronic ink" display. In some embodiments, the presentation interface 330 includes one or more display devices. In addition, or alternatively, presentation interface 330 includes an audio output device (not shown), for example, without limitation, an audio adapter, a speaker, or a printer (not shown).

In some embodiments, the controller 306 includes a user input interface 332. In the exemplary embodiment, the user input interface 332 is coupled to the processor 326 and receives input from the operator. The user input interface 332 may include, for example, and without limitation, a keyboard, a pointing device, a mouse, a stylus, a touch sensitive panel, such as, without limitation, a touch pad or a touch screen, and/or an audio input interface, such as, without limitation, a microphone. A single component, such as a touch screen, may function as both a display device of the presentation interface 330 and the user input interface 332.

In operation of the sinker EDM device 300, the first component 302 is coupled to the ram 310 and the second component 304 is positioned on the work platform 312 within the chamber 316. The dielectric fluid is supplied to the chamber 316 from the dielectric fluid supply 318. The actuator 308 moves the ram 310 and the first component 302 toward the second component 304 positioned on the work platform 312, such that the first and second components 302 and 304 are at least partially immersed in the dielectric fluid in the chamber 316. A small gap may exist between the surfaces 320 and 322 of the components 302 and 304, respectively, and the dielectric fluid fills this gap. Electric current is provided to each component 302 and 304 via the power supply 314. The dielectric fluid acts as an insulator to enable the current and opposing charges to build in the components 302 and 304. When a sufficient voltage between the components 302 and 304 is generated, the insulating properties of the dielectric fluid break down, enabling current to flow between the components 302 and 304 which creates a high temperature zone between the surfaces 320 and 322. The dielectric fluid within the high temperature zone ionizes, and high intensity electric sparks are created between the surfaces 320 and 322. The sparks melt and vaporize material from the surface 320 and/or the surface 322. The direction of current flow and sparks depends on the polarity, which in turn determines which of the surfaces 320 and 322 experiences greater material removal. The sinker EDM process may be cycled, enabling cool dielectric fluid to replace the heated dielectric fluid, which may be circulated back to the dielectric fluid supply 318. The dielectric fluid circulated back to the dielectric fluid supply 318 is optionally cooled to reduce a temperature of the dielectric fluid and restore its insulating properties and/or filtered to remove material removed from the surfaces 320 and/or 322 that is entrained in the dielectric fluid.

As shown in FIG. 3, in the exemplary embodiment, the surface 320 of the first component 302 has a surface profile that includes three-dimensional features (e.g., surface contours). The surface 322 of the second component 304, which may be substantially planar or may have a surface profile that is non-complementary to that of surface 320, may be machined by the sinker EDM process to form a surface profile that substantially complements the surface profile of surface 320, with high precision with respect to the contours of the surface 320, and such that a narrow, uniform gap (e.g., gap G₂ shown in FIG. 6) is defined at a braze joint (e.g., braze joint 334 shown in FIG. 6) defined between the surfaces 320 and 322. In particular, in one embodiment, the voltage generated between the first component 302 and the second component 304 may have a positive polarity, such that material removal by spark erosion occurs substantially along the surface 322 of the second component 304 to create a surface profile that substantially complements the surface profile of the surface 320 of the first component 302. Alternatively, the surface 320 of the first component 302 may be machined to a surface profile that substantially complements a surface profile of the surface 322 of the second component 304, which may include three-dimensional features (e.g., surface contours). In particular, in some embodiments, the voltage generated between the first component 302 and the second component 304 may have a negative polarity, such that material removal by spark erosion occurs substantially along the surface 320 of the first component 302 to create a surface profile that substantially complements the surface profile of the surface 322 of the second component 304, such that a narrow, uniform gap (e.g., gap G₂ shown in FIG. 6) is defined at a braze joint (e.g., braze joint 334 shown in FIG. 6) defined between the surfaces 320 and 322. In other embodiments, the polarity of the voltage between the first and second components 302 and 304 may cycle between positive and negative to remove material from both surfaces 320 and 322, and to enable a narrow, uniform gap (e.g., gap G₂ shown in FIG. 6) is defined at a braze joint (e.g., braze joint 334 shown in FIG. 6) defined between the surfaces 320 and 322.

During the sinker EDM process, the controller 306 may selectively change various operating conditions depending on, for example, the type of material that the components 302 and 304 are fabricated from, a desired degree of precision of the braze joint (e.g., braze joint 334 shown in FIG. 6) between the surfaces 320 and 322, a desired duration of the sinker EDM process, and/or other factors. For example, the controller 306 may control the polarity during the sinker EDM process, e.g., using programmed instructions stored in the memory device 328 that are executed by the processor 326. Additionally and/or alternatively, an operator may selectively adjust the polarity during the sinker EDM process using the user input interface 332. Other operating conditions, e.g., duration, current intensity, and other conditions, may be controlled by the controller 306 based on programmed instructions stored in the memory device 328 and/or based on operator inputs at the user input interface 332.

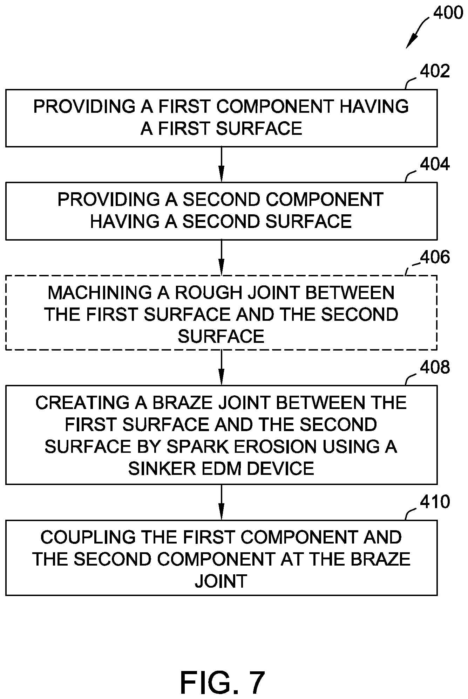

FIGS. 4-6 illustrate an exemplary process sequence in which a narrow, uniform braze joint 334 (FIG. 6) is created between the surface 320 of the first component 302 and the surface 322 of the second component 304. The components 302 and 304 may each be either the coupon 202 and/or the hot flow path component 204 (FIG. 2), and the braze joint 334 may represent the braze joint 230 defined between the coupon 202 and the hot flow path component 204. The process sequence of FIGS. 4-6 will be described with additional reference to FIG. 7, which is a flow diagram of an exemplary method 400 of joining the first component 302 and the second component 304.

In the exemplary embodiment, the method 400 includes providing 402 the first component 302 having the first surface 320 and providing 404 the second component 304 having the second surface 322. As shown in FIG. 4, the first surface 320 and the second surface 322 are initially non-complementary in their respective surface profiles, such that the surfaces 320 and 322 not suitable for coupling (e.g., by brazing) at this stage of fabrication. Moreover, at this stage, the method 400 optionally includes machining 406 at least one of the first surface 320 and the second surface 322 to create a first joint 336 (FIG. 5), also referred to as an intermediate or a rough joint, between the first and second surfaces 320 and 322. The machining 406 may use a conventional machining technique (e.g., milling, hand grinding, or wire EDM) in which the surfaces 320 and 322 are independently machined to create the first joint 336. At this stage, a gap width G₁ is defined along the first joint 336. Moreover, at this stage, the first joint 336 may be generally unsuitable for coupling (e.g., brazing) the first component 302 to the second component 304. For example, the gap width G₁ may not be within a suitable gap width threshold (e.g., less than about 100 micrometers, µm) and/or variations in the gap width G₁ across may vary and may exceed a desired gap tolerance. Typically, conventional machining techniques in which the surfaces 320 and 322 are independently machined can only practicably achieve a gap tolerance of as low as +/- 30 µm, while a smaller gap tolerance (e.g., within +/- 10 µm, or within +/- 5 µm) is desired. A relatively large gap width G₁ and/or relatively high gap tolerance along the first joint 336 may result in limited capillary action of molten braze filler material which inhibits the molten braze filler material from substantially filling the gap between the surfaces 320 and 322 along the first joint 336. Consequently, an undesirable connection between the first and second components 302 and 304 will typically result in this situation when the first and second components 302 and 304 are coupled along the first joint 336.

Accordingly, the method 400 includes creating 408 a desired braze joint 334 (FIG. 6), also referred to as a second joint, between the first and second surfaces 320 and 322. The braze joint 334 is created using a sinker EDM device, such as the sinker EDM device 300 shown in FIG. 3 for example. Either the first component 302 or the second component 304 is used as the electrode of the sinker EDM device, and a voltage is generated between the first and second components 302 and 304 by supplying electric current to each of the first and second components 302 and 304. The generated voltage is sufficient to create high-intensity sparks between the first and second surfaces 320 and 322. The high-intensity sparks work against at least one of the first and second surfaces 320 and 322 to form complementary surface profiles in the components 302 and/or 304 and thereby create a narrow, uniform gap along the braze joint 334. A polarity of the voltage may be positive, in which spark erosion occurs substantially at the second surface 322, and/or the polarity of the voltage may be negative, in which spark erosion occurs substantially at the first surface 320. In some embodiments, the polarity of the voltage may alternate or cycle between positive and negative, such that spark erosion occurs at both the first and second surfaces 320 and 322 to form the complementing surface profiles.

The braze joint 334 created 408 by spark erosion using the sinker EDM device has a gap width G₂ that is characterized by a gap tolerance that is smaller than the gap tolerance of the gap width G₁ of the first joint 336. For example, the gap tolerance of the braze joint 334 may be within +/- 10 µm, or within +/- 5 µm. The gap width G₂ is also suitably within a desired gap width threshold, for example, less than 100 µm. As such, the braze joint 334 has a suitable gap width G₂ and gap tolerance that enables a high-quality connection (e.g., a high quality braze) between the first and second components 302 and 304.

The method 400 further includes coupling 410 the first component 302 and the second component 304 along the braze joint 334. In the exemplary embodiment, the first component 302 and the second component 304 are coupled 410 along the braze joint 334 by fixedly securing the first and second components 302 and 304 via a brazing process along the braze joint 334. The brazing may be performed as described herein, by applying a brazing filler material to at least one of the first and second surfaces 320 and 322 after the sinker EDM process and producing molten brazing filler material along the braze joint 334. The narrow gap width G₂ and small gap tolerance of the braze joint 334 facilitates sufficient capillary action of the molten braze filler material, thus enabling the molten braze material to substantially fill the entirety of the gap G₂ between the surfaces 320 and 322 along the braze joint 334. Upon solidifying the braze filler material, a high-quality braze with little to no voids or pores couples the surfaces 320 and 322, thereby facilitating limiting or preventing the propensity for the first and second components 302 and 304 to break free from one another when the joined components are used. For example, the joined components 302 and 304 may each be one of the coupon 202 or the hot flow path component 204, which are coupled together to form the repaired or refurbished hot flow path component 200 (FIG. 2), which may be used in the hot flow path section 109 of the turbine engine 100 (FIG. 1). The high-quality braze along the braze joint 230/334 couples the coupon 202 and the hot flow path component 204 together in a manner that may facilitate limiting or preventing the propensity for the coupon 202 to break free from the repaired hot flow path component 200 during operation of the turbine engine 100.

The above systems and methods facilitate creating narrow, uniform braze joints between two components that enable a high-quality braze between the components to be formed that has fewer or no defects formed within the braze, thus decreasing the propensity for the coupled components to break free from one another along the braze joint, and increasing the longevity of the connection between the components. Exemplary embodiments include creating the braze joint between two components by sinker EDM in which complementing surface profiles are formed in the components to be coupled by spark erosion of one or both surfaces using one of the components as the sinker EDM electrode. The complementing surface profiles formed by the sinker EDM process define the braze joint having a narrow gap width and small gap tolerance, which facilitates superior capillary action of molten braze filler material along the braze joint and a reliable braze upon solidification of the molten braze material. The systems and methods may be particularly advantageous for components used in extreme heat and high-mechanical stress environments, such as components subjected to the high temperatures and rotational stress in the hot gas section of gas turbines.

Additionally, an exemplary technical effect of the systems and methods described herein includes at least one of: (a) reducing defects within a braze joint due to limited capillary action of the braze filler material; (b) reducing the amount of braze material needed to feed a braze joint when forming a braze in a component; and (c) increase the life of the braze connection between components.

Further aspects of the present disclosure are provided by the subject matter of the following clauses:
Clause 1. A method of joining a first component and a second component, said method comprising: providing the first component including a first surface; providing the second component including a second surface; creating a braze joint between the first and second surfaces using a sinker electrical discharge machining (EDM) device, wherein the first component is used as an electrode of the sinker EDM device and a voltage is generated between the first and second components such that the braze joint is created by spark erosion of at least one of the first component and the second component; and coupling the first and second components securely together along the braze joint.
Clause 2. The method of Clause 1, wherein coupling the first and second components securely together forms a repaired component used within a hot flow path defined within a turbine engine.
Clause 3. The method of any one of the preceding clauses, wherein providing the first component comprises providing the first component fabricated from a superalloy including at least one of nickel, iron, and cobalt.
Clause 4. The method of any one of the preceding clauses, wherein providing the first component comprises providing the first component including a worn region defining the first surface and providing the second component used to repair the worn region.
Clause 5. The method of any one of the preceding clauses, wherein creating the braze joint comprises defining a gap between the first and second surfaces along the braze joint having a gap tolerance within +/- 5 micrometers.
Clause 6. The method of any one of the preceding clauses, wherein, prior to creating the braze joint, a rough joint is defined between the first surface and the second surface, wherein a gap tolerance of the braze joint is smaller than a gap tolerance of the rough joint.
Clause 7. The method of any one of the preceding clauses, further comprising machining at least one of the first and second surfaces to create the rough j oint prior to creating the braze j oint.
Clause 8. The method of any one of the preceding clauses, wherein coupling the first and second components securely together further comprises fixedly securing the first and second components together via brazing along the braze joint.
Clause 9. A method of repairing a component for use in a turbine engine, the turbine engine component including a first surface, said method comprising: providing a filler component including a second surface; creating a braze joint between the first surface and the second surface using a sinker electrical discharge machining (EDM) device, wherein one of the turbine engine component and the filler component is used as an electrode of the sinker EDM device and a voltage is generated between the turbine engine component and the filler component to create the braze joint by spark erosion of at least one of the turbine engine component and the filler component; and coupling the turbine engine component and the filler component securely together along the braze joint.
Clause 10. The method of any one of the preceding clauses, further comprising machining a worn region of the turbine engine component to define the first surface.
Clause 11. The method of any one of the preceding clauses, wherein the filler component is used as the electrode of the sinker EDM device.
Clause 12. The method of any one of the preceding clauses, wherein the turbine engine component is used as the electrode of the sinker EDM device.
Clause 13. The method of any one of the preceding clauses, wherein creating the braze joint comprises defining a gap between the first and second surfaces along the braze joint having a gap tolerance within +/- 5 micrometers.
Clause 14. The method of any one of the preceding clauses, wherein, prior to creating the braze joint, a rough joint is defined between the first surface and the second surface, wherein a gap tolerance of the braze joint is smaller than a gap tolerance of the rough joint.
Clause 15. The method of any one of the preceding clauses, further comprising machining at least one of the first and second surfaces to create the rough j oint prior to creating the braze j oint.
Clause 16. The method of any one of the preceding clauses, wherein coupling the turbine engine component and the filler component securely together further comprises fixedly securing the turbine engine component and the filler component together via brazing along the braze joint.
Clause 17. A method of joining a first component and a second component, said method comprising: machining at least one of the first and second components to create a first joint between a first surface of the first component and a second surface of the second component; after the machining, creating a second joint between the first and second surfaces, wherein the second joint has a smaller gap tolerance than the first joint, and wherein the second joint is created by spark eroding complementing surface profiles in the first and second surfaces using one of the first and second components as an electrical discharge machining (EDM) electrode; and coupling the first and second components securely together along the second joint.
Clause 18. The method of any one of the preceding clauses, wherein the spark eroding comprises generating voltage having a positive polarity between the EDM electrode and another one of the first component and the second component.
Clause 19. The method of any one of the preceding clauses, wherein the spark eroding comprises generating voltage having a negative polarity between the EDM electrode and another one of the first component and the second component.
Clause 20. The method of any one of the preceding clauses, wherein coupling the first component and the second component securely together comprises fixedly coupling the first and second components via brazing along the second joint.

Exemplary embodiments of systems and methods for joining components at a narrow, uniform braze joint are described above in detail. The methods and systems are not limited to the specific embodiments described herein, but rather, components of systems and/or steps of the methods may be utilized independently and separately from other components and/or steps described herein. For example, the systems and methods may also be used in combination with many types of components, and are not limited to practice only with components of rotary machines (e.g., a gas turbine engine) as described herein. Rather, the exemplary embodiment can be implemented and utilized in connection with many other brazing applications or applications that involves joining components at a j oint defined by highly complementing surface features of the components.

Although specific features of various embodiments of the present disclosure may be shown in some drawings and not in others, this is for convenience only. References to "one embodiment" in the above description do not exclude the existence of additional embodiments that also incorporate the recited features. In accordance with the principles of embodiments of the present disclosure, any feature of a drawing may be referenced and/or claimed in combination with any feature of any other drawing.

This written description uses examples to disclose the embodiments of the present disclosure, including the best mode, and also to enable any person skilled in the art to practice embodiments of the present disclosure, including making and using any devices or systems and performing any incorporated methods. The patentable scope of the embodiments described herein is defined by the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A method of joining a first component and a second component, said method comprising:
providing the first component including a first surface;
providing the second component including a second surface;
creating a braze joint between the first and second surfaces using a sinker electrical discharge machining (EDM) device, wherein the first component is used as an electrode of the sinker EDM device and a voltage is generated between the first and second components such that the braze joint is created by spark erosion of at least one of the first component and the second component; and
coupling the first and second components securely together along the braze joint.

2. The method of Claim 1, wherein coupling the first and second components securely together forms a repaired component used within a hot flow path defined within a turbine engine.

3. The method of Claim 1 or Claim 2, wherein providing the first component comprises providing the first component fabricated from a superalloy including at least one of nickel, iron, and cobalt.

4. The method of any one of the preceding claims, wherein providing the first component comprises providing the first component including a worn region defining the first surface and providing the second component used to repair the worn region.

5. The method of any one of the preceding claims, wherein creating the braze joint comprises defining a gap between the first and second surfaces along the braze joint having a gap tolerance within +/- 5 micrometers.

6. The method of any one of the preceding claims, wherein, prior to creating the braze joint, a rough joint is defined between the first surface and the second surface, wherein a gap tolerance of the braze joint is smaller than a gap tolerance of the rough joint.

7. The method of any one of the preceding claims, further comprising machining at least one of the first and second surfaces to create the rough joint prior to creating the braze j oint.

8. The method of any one of the preceding claims, wherein coupling the first and second components securely together further comprises fixedly securing the first and second components together via brazing along the braze joint.

9. The method of any one of the preceding claims, wherein providing the first component comprises providing a turbine engine component, and wherein providing the second component comprises providing a filler component.

10. The method of any one of Claims 1 to 8, wherein providing the second component comprises providing a turbine engine component, and wherein providing the first component comprises providing a filler component.

11. The method of Claim 9 or Claim 10, further comprising machining a worn region of the turbine engine component to define the first surface.

12. The method of any one of Claims 9 to 11, wherein the filler component is used as the electrode of the sinker EDM device.

13. The method of any one of Claims 9 to 12, wherein the turbine engine component is used as the electrode of the sinker EDM device.

14. The method of any one of the preceding claims, wherein the voltage generated between the first and second components has a positive polarity.

15. The method of any one of the preceding claims, wherein the voltage generated between the first and second components has a negative polarity.
